(19) Europäisches Patentamt
European Patent Office
Office européen des brevets

(11) **EP 3 506 131 A1**

(12) **EUROPEAN PATENT APPLICATION**
published in accordance with Art. 153(4) EPC

(43) Date of publication:
**03.07.2019 Bulletin 2019/27**

(21) Application number: **18798040.4**

(22) Date of filing: **10.05.2018**

(51) Int Cl.:
***G06F 17/30*** (2006.01)

(86) International application number:
**PCT/JP2018/018137**

(87) International publication number:
**WO 2018/207874 (15.11.2018 Gazette 2018/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.05.2017 JP 2017093522**

(71) Applicant: **IMATRIX HOLDINGS CORP.**
**Kawasaki-shi,**
**Kanagawa 2160004 (JP)**

(72) Inventor: **YOKOYAMA, Atsushi**
**Kawasaki-shi**
**Kanagawa 216-0004 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **ANALYSIS METHOD USING GRAPH THEORY, ANALYSIS PROGRAM, AND ANALYSIS SYSTEM**

(57)      [problem(s) to be solved]
An analysis method using graph theory is provided to analyze a complicated relevance between nodes.
[Solution]
An analysis method using graph theory according to the present invention includes calculating an N-dimensional vector representing a relevance between nodes based on dictionary data; and creating graph data vectorized by the calculated N-dimensional vector.

Fig. 11

## Description

[Technical Field]

The present invention relates to analysis methods using graph theory, and more particularly to methods for analyzing a more multiple or complicated relevance using graph theory.

[Background]

One approach for extracting user's preference includes extracting words that user is interested in from sentence data subjected to analysis. For example, the patent document 1 discloses a method for commonly extracting data indicating user's preferences from sentences created by multiple users. The patent document 2 discloses a method for calculating a similarity by using a semantic space where the distance between words is closer according to the degree of similarity between word meanings and estimating a probability distribution indicating objects from a distribution in the semantic space of a plurality of words.

[Prior art document(s)]

[patent document]

[patent document1] JP2017-27168A
[patent document2] JP2017-27106A

[Summary of the invention]

[Problem to be solved]

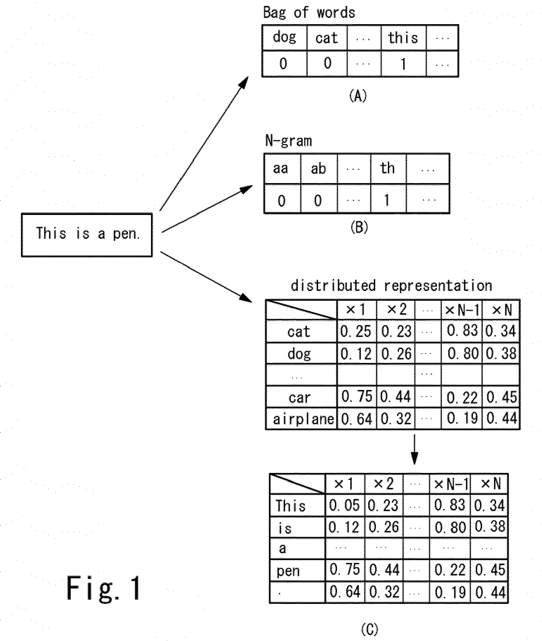

One analysis method of natural language is "Bag of Words" in which words to be evaluated are predefined and data indicating the presence/absence of such words is used. Since this method decides the presence/absence of predefined words, a word which is not predefined cannot be used and the order of words cannot be considered. For example, text data "This is a pen" shown in Fig. 1 is divided per a word. If the word "this" is predefined, data "1" indicating a hit is generated.

Another analysis method of natural language includes "N-gram" in which text data is divided per N-letters (where N is an integer greater than or equal to 1) and data indicating the presence/absence of such letters is used. For example, for analyzing "This is a pen" shown in Fig. 1 by 2-gram, this text data is divided per 2 letters as "Th", "hi" and "is", and data "1" indicating a hit is generated.

Furthermore, another analysis method includes a method for vectorizing words using machine leaning technology. For example, the words in "This is a pen" shown in Fig. 1 are compared to words in a dictionary and the semantic similarity relation between words is represented by a vector. Such vectorization of words is a semantic vector to which the semantic feature of a word is reflected, or a distributed representation, which may be generated using technology such as word2vec. The characteristics of word2vec include: (1) similar words become a similar vector, (2) vector component has a meaning, and (3) one vector can be operated by another vector. For example, the operation such as "King - man + women = Queen" may be performed. Besides the vectorization of words such as word2vec, there are sent2vec, product2vec, query2vec, med2vec etc., which vectorize documents, products, or questions.

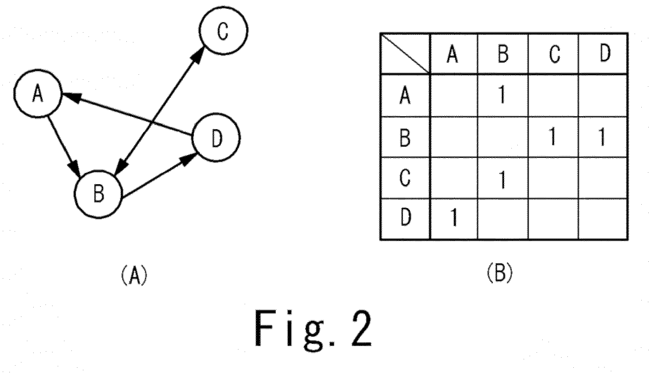

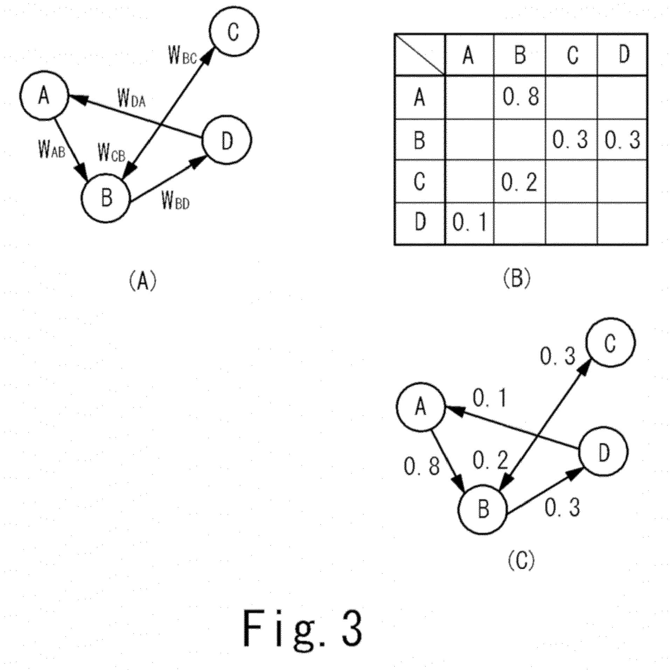

Furthermore, graph theory is widely known as an analysis method of data structure. Graph theory is a graph configured with a collection of nodes (vertices) and edges, by which the relevance of various events may be expressed. For example, as shown in Fig. 2(A), nodes A, B, C, and D are connected by each edge, and the direction of the edge indicates the direction of the relevance between nodes. Fig. 2(B) shows a diagram in which such graph is converted to data. Fig. 3 shows weighted graph theory in which edges are weighted, namely, edges are quantified. For example, a weight $W_{AB}$ representing the relevance from node A to node B is shown as 0.8, and a weight $W_{BC}$ representing the relevance from node B to node C is shown as 0.2.

In graph theory and weighted graph theory, since the relation between nodes may be only uniquely represented by the presence/absence of edge or one value (scalar), the descriptiveness of the relation between nodes is not sufficient and it is difficult to represent a multiple relation and/or complicated relation between nodes.

To solve the above conventional problems, embodiments of the present invention can provide analysis methods using graph theory for analyzing a complicated relevance.

[Solution to Problem]

An analysis method according to the present invention is using graph theory representing a relevance between nodes. The method includes calculating an N-dimensional vector between nodes based on dictionary data, and creating graph data vetorized by the calculated N-dimensional vector.

In one implementation, the calculating includes extracting words from text data including the relevance between nodes, calculating a relation vector representing the semantic similarity among the extracted words, extracting vector data closest to the relation vector from the dictionary data, and calculating the N-dimensional vector. In one implementation, the dictionary data includes vector data representing the similarity among words. In one implementation, the calculating includes generating vector data representing the similarity among words by processing data for learning using word2vec, the data for learning including text data configured with various words, and storing the generated vector data in the dictionary data. In one implementation, the calculating includes performing morphological analysis of analysis object data, and predicting the relation between nodes based on an average vector of the analyzed words. In one implementation, the analysis object data is electronic mails. In one implementation, the analysis method further includes converting, by the analysis system, the vectorized graph data to another graph data. In one implementation, the converting includes converting to weighted graph data by calculating an inner product of the vector of the vectorized graph data. In one implementation, the analysis method further includes analyzing, by the analysis system, the relevance between nodes based on the vectorized graph data. In one implementation, the node represents a person, and the analyzing includes analyzing human relations between nodes. In one implementation, the analyzing includes calculating an average vector of all vectors between nodes based on the vectorized graph data, selecting a similar vector similar to the average vector, and extracting words of the selected similar vector.

An analysis program according to the present invention is performed by a computer and for analyzing a relevance between nodes by using graph theory representing a relevance between nodes. The program includes calculating an N-dimensional vector representing a relevance between nodes based on dictionary data, the dictionary data including vector data for vectorizing words representing the relevance between nodes in N-dimension, and creating graph data vectorized by the calculated N-dimensional vector.

An analysis system according to the present invention is for analyzing a relevance between nodes by using graph theory representing a relevance between nodes. The system includes a calculation unit for calculating an N-dimensional vector representing a relevance between nodes based on dictionary data, the dictionary data including vector data for vectorizing words representing the relevance between nodes in N-dimension, and a creating unit for creating graph data vectorized by the calculated N-dimensional vector. In one implementation, the system further includes a conversion unit for converting the vectorized graph data to another graph data.

[Effects of the invention]

According to the present invention, since a relevance between nodes in graph theory is defined by an N-dimensional vector, a complicated relevance between nodes may be represented and analyzed.

[Brief description of the drawings]

Fig. 1 are diagrams explaining an example of analyzing natural language.
Fig. 2 are diagrams explaining a general graph theory.
Fig. 3 are diagrams explaining a weighted graph theory.
Fig. 4 are diagrams explaining a vectorization graph theory of the present invention.
Fig. 5 are diagrams illustrating an example of applying a vectorization graph theory of the present invention to human relations.
Fig. 6 are diagrams illustrating an example of extracting a specific relation from a vectorization graph theory of the present invention.
Fig. 7 are diagrams explaining an example of extracting the intensity from a vectorization graph theory of the present invention.
Fig. 8 is a diagram explaining an example of converting a vectorization graph theory of the present invention to another graph.
Fig. 9 is a diagram illustrating an example of describing complicated relations in a same hierarchy using a vectorization graph theory of the present invention.
Fig. 10 is a diagram illustrating an example of describing relations of other hierarchies using a vectorization graph theory of the present invention.
Fig. 11 is a diagram illustrating an example configuration of an analysis system using a vectorization graph theory of an embodiment of the present invention.
Fig. 12 (A) is an example of data for learning, and Fig. 12(B) is an example of data for evaluation.
Fig. 13(A) is an example of dictionary data, and Fig. 13(B) is a diagram explaining vectorization graph data.
Fig. 14 is a flow chart of operation of a vectorization module according to an embodiment.
Fig. 15(A) is an example of normal graph data, and Fig. 15(B) is an example of weighted graph data which is weighted.
Fig. 16 is a flow chart of operation illustrating a specific example of a vectorization module according to an embodiment.
Fig.17 are flow charts of operation of a graph conversion module according to an embodiment, Fig. 17(A) is a flow chart of operation of extracting relations, and Fig. 17(B) is a flow chart of operation of extracting the relation intensity.
Fig. 18 is an example flow chart of operation of a graph analysis module according to an embodiment.
Fig. 19 is an example flow chart of operation of a vectorization graph analysis module according to an embodiment.

[Detailed description of embodiments]

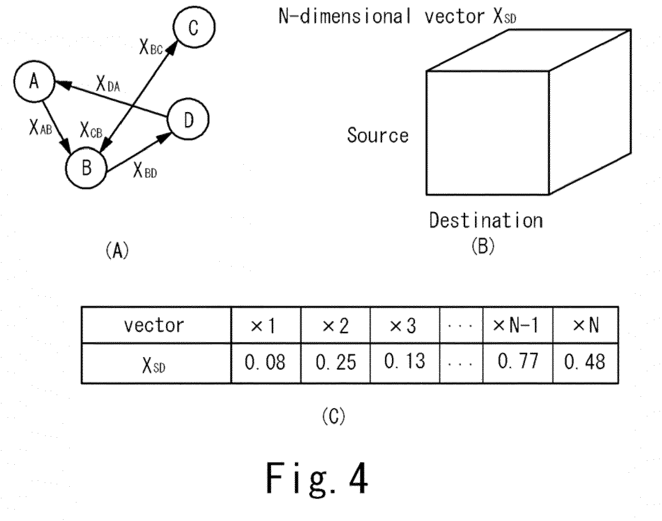

Now, referring to drawings, embodiments of an analysis device using graph theory according to the present invention will be described in detail. Fig. 4 provides diagrams explaining the outline of a vectorization graph theory according to the present invention. Fig. 4(A) is one example of a graph including nodes and edges, Fig. 4(B) is an example in which a relevance between nodes is vectorized in N-dimension, and Fig. 4(C) is one example of vectorization graph data in N-dimension.

As shown in Fig. 4(A), the relations of nodes A, B, C, and D are indicated by edges, respectively. Edge is a vector which shows a relevance from one node to another node. For example, the connection from node A to node B is shown as the vector $X_{AB}$ and the connection from node D to node A is shown as the vector $X_{DA}$, where the node at departure point of vector is "source" and the node at destination point is "destination".

In a vectorization graph theory of the present invention, as shown in Fig. 4(B), a relevance between source and destination is defined by an N-dimensional vector (where N is an integer greater than 2). The N-dimensional vector may represent, for example, a complicated or multiple relation between source and destination as well as a relation between different hierarchies. The N-dimensional vector may be, for example, a semantic vector in which the semantic similarity relation between source and destination is converted into numerical form, or a distribution representation in which the semantic similarity relation between source and destination is converted into numerical form. When the relation between source and destination is defined by the N-dimensional vector, vectorization graph data as shown in Fig. 4(C) is obtained.

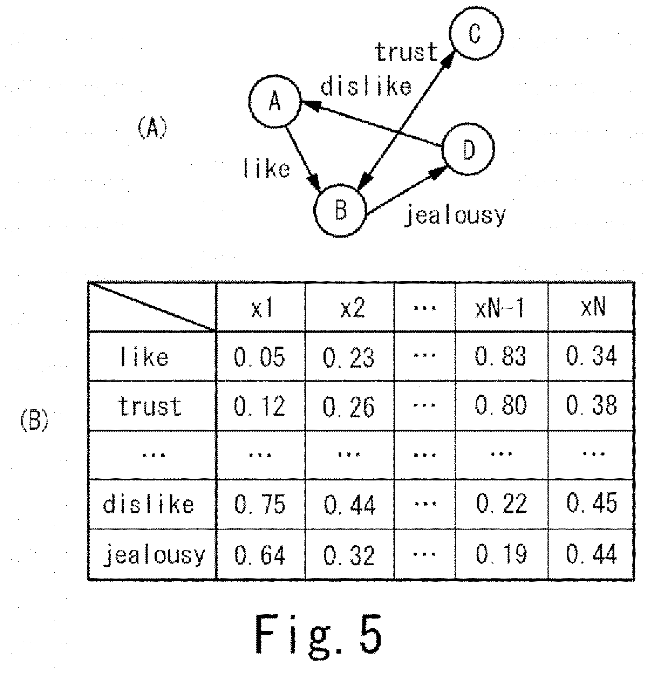

Fig. 5 provides an example illustrating human relations by a vectorization graph theory of the present invention. In Fig. 5(A), nodes A-D are shown as a person or the equivalent of a person. Each node is connected by a vector representing human relations For example, shown is that node A has a feeling of like to node B, node B has a feeling of jealousy to node D, node D has a feeling of dislike to node A, and node B and node C have a feeling of trust each other. Fig. 5(B) is vectorization graph data in which the relations in Fig. 5(A) are shown by the N-dimensional vector. For example, "like" includes various feelings, namely, "like" includes various meanings such as the degree of "like" ("very much", "a little", etc.) and the object of "like" ("face", "eyes", "character" etc.) The N-dimensional vector may be regarded as a vector in which such feeling of "like" is converted into numerical form from a plurality of multiple viewpoints. In this case, each relevance of "like" from node A to node B, "trust" between node B and node C, "dislike" from node D to node A, and "jealousy" from node B to node D is defined by the N-dimensional vectors of "like", "trust", "dislike", and "jealousy" shown in Fig. 5(B).

Using a vectorization graph theory, a relevance of human relations may be represented. Also, using a vectorization graph theory, for example, link relations between webpages on the internet network may be vectorized, or user's buying motive in relations between user and products may be vectorized.

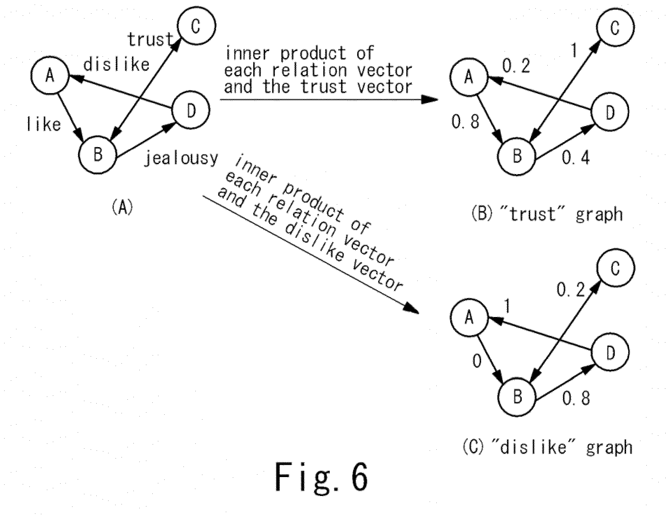

Vectorization graph data generated by a vectorization graph theory of the present invention may be converted to another graph data for other graph theory. For example, graph data for weighted graph theory may be calculated by referring to vectorization graph data and performing any inner product calculation for a vector between nodes. Also, graph data for normal graph theory may be calculated by calculating a threshold value of graph data of the weighted graph theory. One example of such modification is shown in Fig. 6. The vectorization graph theory as shown in Fig. 6(A) may be converted to weighted graph theory representing trust as shown in Fig. 6(B) by taking an inner product of each relation vector and the trust vector and regarding the obtained scalar as the trust value of each relation. In this case, the trust vector may use a vector which is obtained in the process of calculating vector data such as word2vec. This allows a weighted graph showing the degree of trust to be obtained. Similarly, when converting to "dislike" graph shown in Fig. 6(C), a graph showing the degree of dislike may be obtained by taking an inner product of each relation and the dislike vector. In this case, since the vector between nodes A and B is "like" which is opposite to "dislike", the inner product of the vector between two is small. Thus, the vectorization graph may be converted to a graph showing various relations.

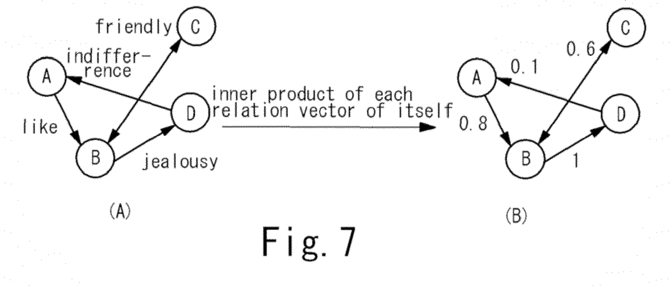

Furthermore, a vectorization graph theory of the present invention may be converted to graph theory representing the intensity of feelings or relations. For example, for a vectorization graph as shown in Fig. 7(A), by taking an inner product of each relation vector of itself, only the intensity of feelings or relations between nodes may be extracted as shown in Fig. 7(B).

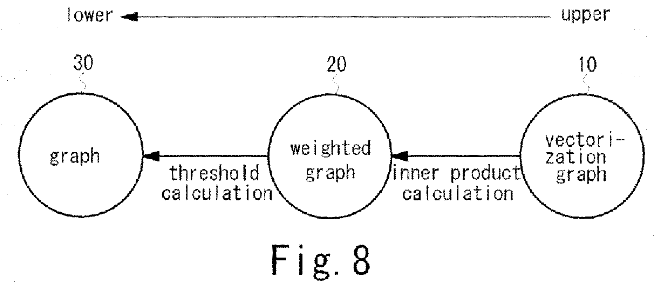

Fig. 8 is a diagram explaining a conversion relation of a vectorization graph theory of the present invention. As shown in Fig. 8, a vectorization graph 10 of the present invention may be converted to a weighted graph 20 by calculating any inner product. The weighted graph 20 may be converted to a normal graph 30 by calculating threshold values. It should be noted that such conversion can be performed from the upper to the lower and conversion from lower to upper cannot be performed.

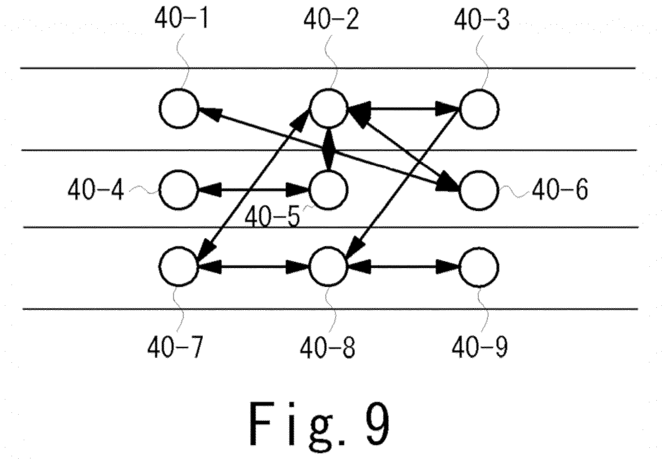

Since a vectorization graph theory of the present invention may describe a complicated or multiple relations, relations across multiple hierarchies may be described, which is difficult for conventional graph theory. Fig. 9 is a diagram of the relation across 3 hierarchies. For example, the lower hierarchy (nodes 40-7, 40-8, 40-9) may be hardware, the middle hierarchy (nodes 40-4, 40-5, 40-6) may be software, and the upper hierarchy (nodes 40-1, 40-2, 40-3) may be user.

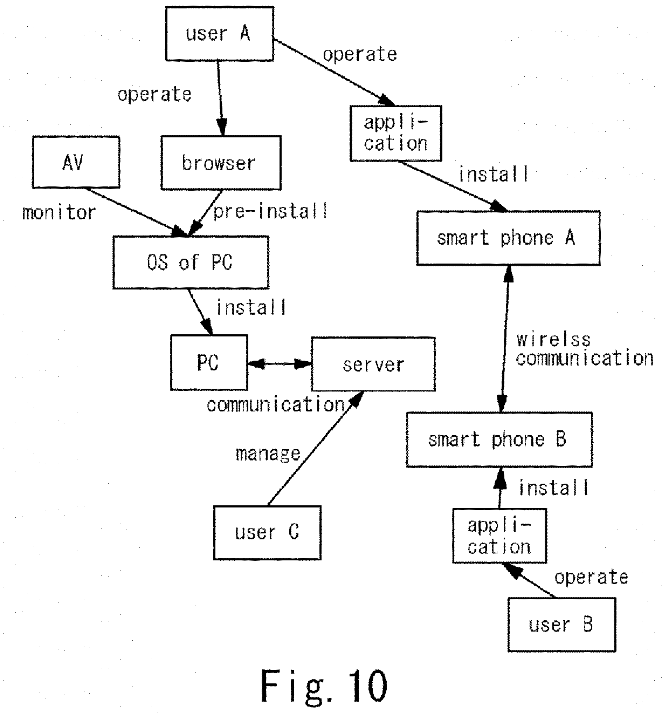

A specific example of the vectorization graph theory across multiple hierarchies described above is shown in Fig. 10. For example, user A operates a browser pre-installed to an operating system (OS) of a personal computer (PC). The operating system is installed to the personal computer. The personal computer (PC) communicates with a server. An audio video (AV) monitors the operating system. Furthermore, user A operates an application installed to a smartphone A. User B operates an application installed to a smartphone B. Wireless communication is performed between the smartphones A and B and user C controls the server. The relevance among such multiple hierarchies may be represented by the vectorization graph theory.

A vectorization graph theory of the present invention may be implemented by a hardware, a software, or a combination thereof, which are provided in one of more computer devices, a network-connected computer device or a server.

[Embodiments]

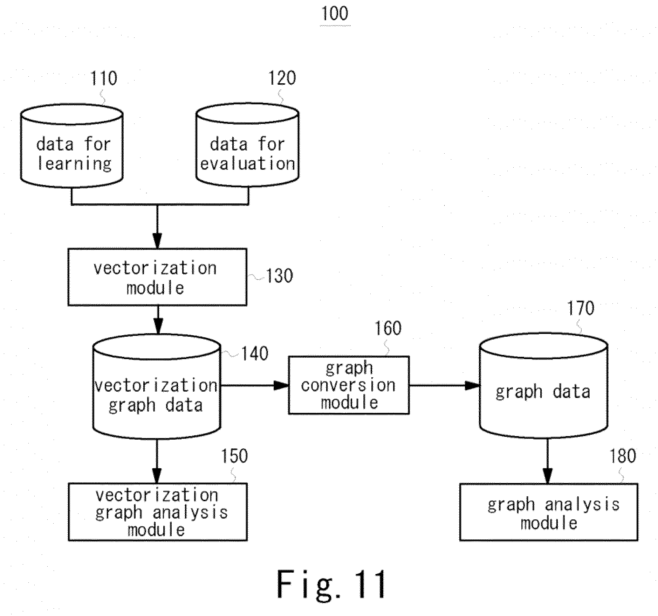

Now, embodiments of the present invention will be described. Fig. 11 is a block diagram illustrating the entire configuration of an analysis system using a vectorization graph theory according to an embodiment of the present invention. An analysis system 100 according to the embodiment includes data for learning 110, data for evaluation 120, a vectorization module 130, vectorization graph data 140, a vectorization graph analysis module 150, a graph conversion module 160, graph data 170, and a graph analysis module 180. In one implementation, the analysis system 100 is implemented by a general-purpose computing device having a storage medium such as memory and a processor for executing software/program instructions etc. In one implementation, in the analysis system 100, one or more computing devices are connected to one or more servers via network etc. The computer device may work with functions stored in the server and perform analyses on various events using graph theory. In one implementation, the computer device may execute software/program for executing functions of the vectorization module 130, the graph conversion module 160, the vectorization graph analysis module 150, and the graph analysis module 180, and the computer device may output analysis results of the relevance between nodes by a displaying means such as a display.

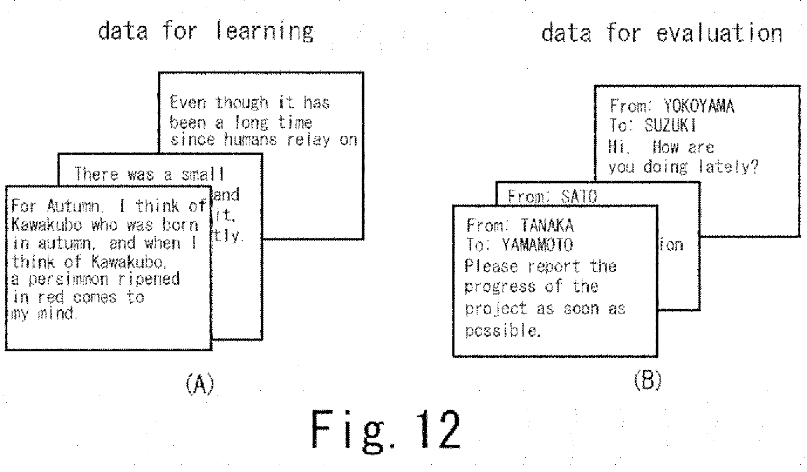

The data for learning 110 is data used for leaning of the analysis system 100. For example, the vectorization module 130 of the analysis system 100 obtains the data for learning 110, processes the obtained data for leaning using the machine learning to generate vector data obtained using word2vec etc. (for example, data in which the semantic similarity relation between words is represented by a vector), and stores the vector data in a dictionary. The efficiency and precision of analysis is improved by executing various leaning functions. For example, when analyzing complicated human relations, it is preferred that the analysis system 100 processes the data for learning required for the analysis to have vector data therefor. The data for learning 110 is read out from a database or storage medium, or imported from the external (for example, a resource via storage device or network). The data for learning 110 is, for example, document data used for generating the N-dimensional vector described above. For example, as shown in Fig. 12(A), various information and media are used such as sentences in AOZORA BUNKO (which provides, on the website, works whose copyright expired), documents in wikipedia or corpus.

On the other hand, the data for evaluation 120 is data analyzed by the analysis system 100, which is read out from storage media or imported from the external (for example, a resource via storage device or network). In one example, when analyzing human relations, for example, as shown in Fig. 12(B), the data for evaluation 120 may be electronic mails (or chats or postings on SNS or a bulletin board) in which several people appear and exchanges of various information are described.

The vectorization module 130 analogizes human relations from the data for evaluation 120. The analogized relation is vectorized using generated N-dimensional vector data. In one example, morphological analysis is performed to an email from Mr. A to Mr. B, and then an average vector of all words is regarded as the relation between Mr. A and Mr. B and as the relation vector. A vector closest to the relation vector is extracted from the vector data stored in the dictionary and the relation indicated by the extracted vector is regarded as the relation between Mr. A and Mr. B. Because the e-mail was sent from Mr. A to Mr. B, it is assumed that words associated with the relation between them are used for all sentences in the e-mail. Thus, the relation between Mr. A and Mr. B is analogized by the average vector of all words. The e-mail from Mr. A to Mr. B may be extracted, for example, by identifying the name of a sender or the name of a recipient from a plurality of received e-mails.

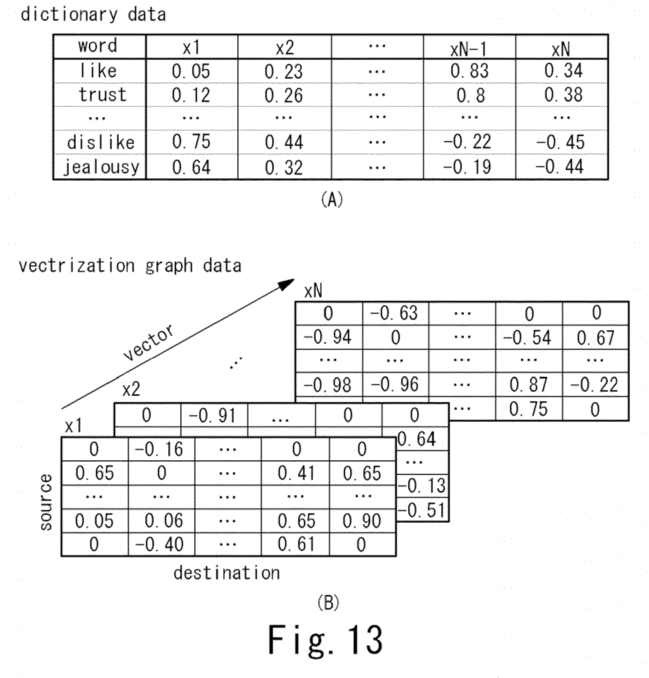

When the data for learning 110 is processed by the vectorization module 130, the learning result is stored as vector data in the dictionary. One example of the vector data stored in the dictionary is shown in Fig. 13(A). Dictionary data includes vector data for vectorizing words presenting a relevance between nodes in N-dimension. For example, by referring to N-dimensional vector data of a word "like" stored in the dictionary, N-dimensional vectorization graph data representing the relation between nodes of the source and destination as shown in Fig. 13(B) is generated.

When the data for evaluation 120 is processed by the vectorization module 130, the vectorization module 130 refers to the vector data stored in the dictionary and extracts an N-dimensional vector representing a relevance between nodes, namely, generates vectorization graph data in which the relation between source and destination is vectorized in N-dimension. Fig. 13(B) is one example of vectorization graph data where the source and destination are defined by the N-dimensional vector. The generated vectorization graph data is stored in a storage medium and then analyzed by the vectorization graph analysis module 150.

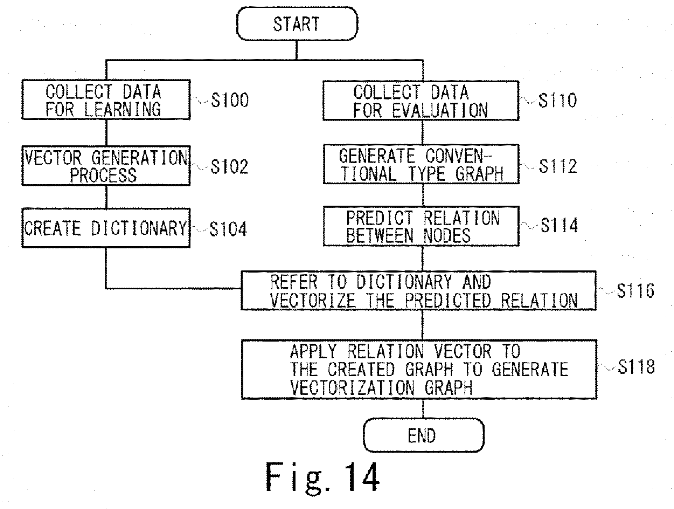

The flow chart of operation of the vectorization module 130 is shown in Fig. 14. When the analysis system 100 executes leaning functions, the vectorization module 130 collects the data for learning 110 (S100), generates vector data based on the collected data (S102), and stores the generated vector data in the dictionary (S104).

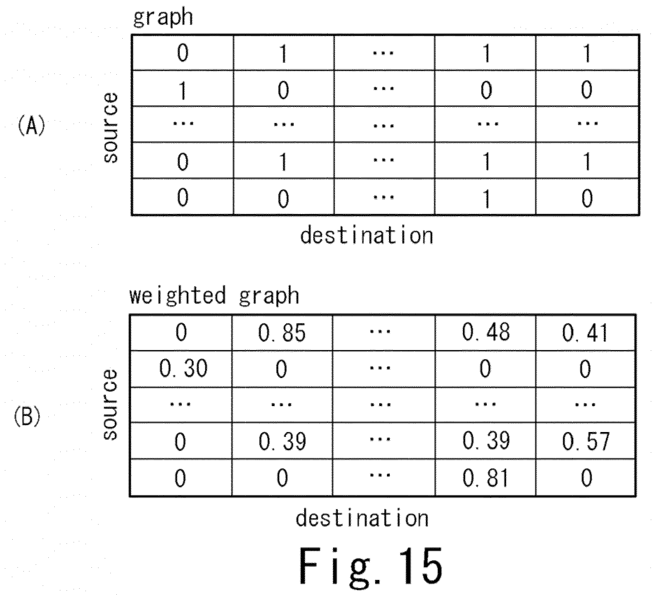

On the other hand, when the analysis system 100 analyzes data for evaluation, the vectorization module 130 collects the data for evaluation 120 (S110) and generates conventional type graph data based on the collected data (S112). The conventional type graph is a graph in which the relation between source and destination is represented as shown in Fig. 15(A) or a weighted graph in which the relation between source and destination is represented by weight as shown in Fig. 15(B), which are not vectorized in N-dimension. Then, the vectorization module 130 refers to the vector data stored in the dictionary to vectorize a predicted relation between nodes (S116), and applies such vector to the created conventional type graph to generate N-dimensional vectorization graph data (S118). The generated vectorization graph data is provided to the vectorization graph analysis module 150 by which analysis is performed.

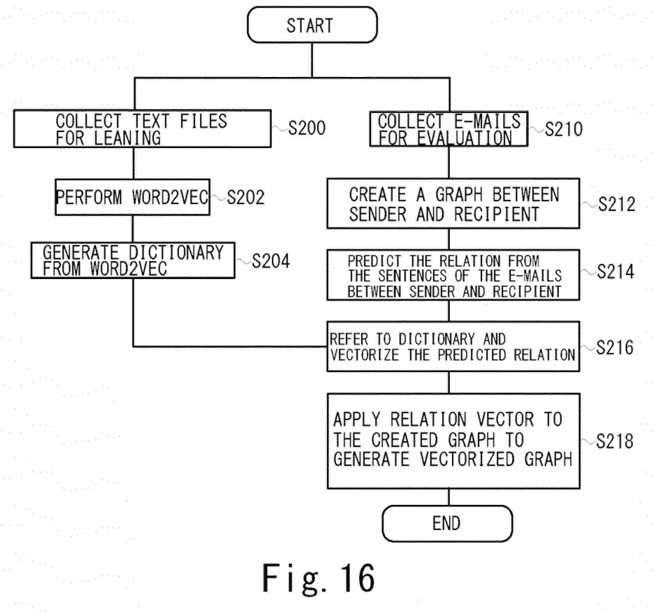

A specific flow chart of operation of the vectorization module 130 is shown in Fig. 16. When leaning function is executed, the vectorization module 130 collects text files for leaning (S200), performs word2vec to generate vector data (S202), and stores the generated vector data in the dictionary (S204). When the analysis is performed, the vectorization module 130 collects e-mails for evaluation (S210), creates a graph between sender and recipient (S212), predicts the relation from the sentences of the e-mails between sender and recipient (S214), vectorizes the predicted relation by referring to the dictionary (S216), and applies the relation vector to the created graph to generate a vectorization graph (S218).

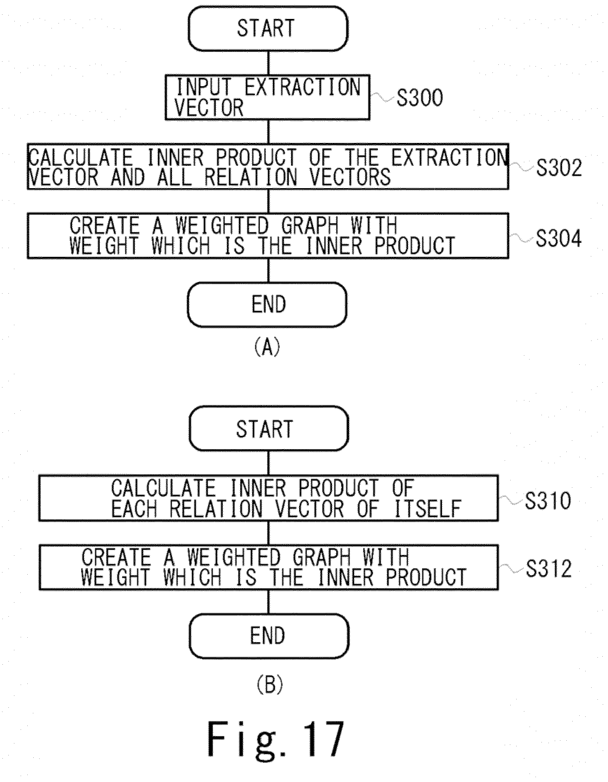

Now, the graph conversion module 160 will be described. Fig. 17(A) is a flow chart of operation for extracting the relation by the graph conversion module 160. Extracting the relation is extracting a "trust" graph or a "dislike" graph, for example, as shown in Figs. 6(B) and 6(C). The graph conversion module 160 inputs an extraction vector from vector data generated by the vectorization module 130 (S300). For example, when creating a "trust" graph, the extraction vector is the "trust" graph in Fig. 6(A). Then, the graph conversion module 160 calculates an inner product of the extraction vector and all relation vectors (S302) and create a weighted graph with weight which is the inner product (S304).

Fig. 17(B) is a flow chart of operation for extracting the relation intensity by the graph conversion module 160. Extracting the relation intensity is extracting only the intensity of feelings, for example, as shown in Fig. 7. In this case, the graph conversion module 160 calculates an inner product between each relation vector (S310), and then creates a weighted graph with weight which is the inner product (S312).

The conversion result of the graph conversion module 160 is stored in the storage medium as the graph data 170. As shown in Figs. 15(A) and (B), the graph data 170 is un-vectorized normal graph data or weighted graph data.

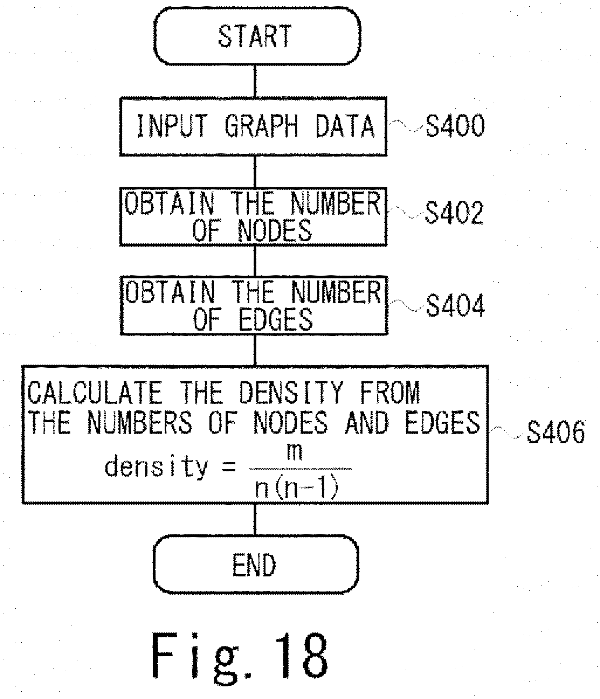

The graph analysis module 180 analyzes a graph based on the graph data 170. One example of a flow chart of operation of the graph analysis module 180 is shown in Fig. 18. Graph theory has the index "density" and the flow chart is for calculating it. The graph analysis module 180 inputs the graph data 170 (S400), obtains the number of nodes based on the input graph data (S402), obtains the number of edges (S404), and calculates the density from the obtained numbers of nodes and edges (S406). Calculating the density is represented by:

$$density = m/n(n-1),$$

where n is the number of nodes and m is the number of edges.

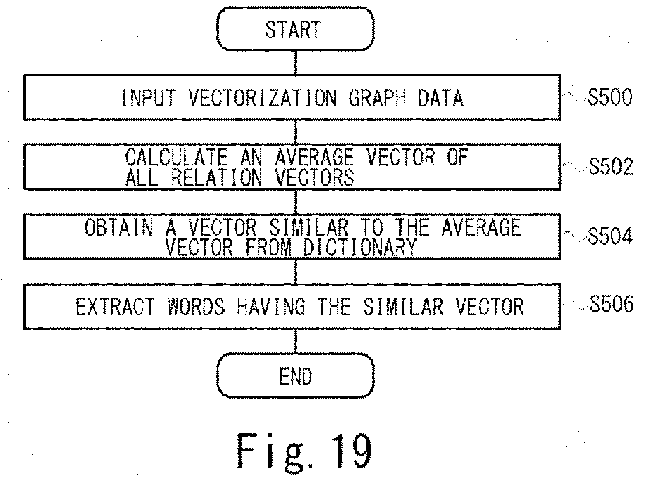

The vectorization graph analysis module 150 analyzes a vectorization graph based on the vectorization graph data 140. One example of a flow chart of operation of the vectorization graph analysis module 190 according to the present embodiment is shown in Fig. 19. In this case, the example is for obtaining an average vector which is an average of all relations. For example, when the analysis object is human relations in an organization, the relation in the organization, which is leveled-off by the average vector, may be obtained.

The vectorization graph analysis module 150 inputs the vectorization graph data 140 (S500), and calculates an average vector of all relation vectors based on the input vectorization graph data (S502). The relation vector is a vector by which the relation between nodes is represented. Then, the vectorization graph analysis module 150 obtains a vector similar to the average vector from the dictionary data (S504), and extracts words having the similar vector (S506). From the extracted words, the average relation in the organization may be obtained.

Besides the above description, a vectorization graph theory of the present invention is applicable for conventional graph theory. For example, indices are applicable for node (degree), point/route (degree/distance), graph (density, reciprocity, transitivity), and inter-graphs (isomorphism), and problems are applicable for node (ranking problem, classification), point/route (clustering, link prediction, minimum spanning tree problem, shortest route problem), and graph (vertex coloring problem).

Although the preferred embodiments of the present invention are described in detail, the present invention is not limited to such specific embodiments. Various changes and modifications are possible within the scope of the claims.

[Explanation of reference numerals]

  100: analysis system
  110: data for learning
  120: data for evaluation
  130: vectorization module
  140: vectorization graph data
  150: vectorization graph module
  160: graph conversion module
  170: graph data
  180: graph analysis module

**Claims**

1. An analysis method used in an analysis system for analyzing a relevance between nodes by using graph theory representing a relevance between nodes, the method comprising:

     calculating, by the analysis system, an N-dimensional vector representing a relevance between nodes based on dictionary data, the dictionary data including vector data for vectorizing words representing the relevance between nodes in N-dimension; and
     creating, by the analysis system, graph data vectorized by the calculated N-dimensional vector.

2. The analysis method of claim 1, wherein the calculating includes extracting words from text data including the relevance between nodes, calculating a relation vector representing the semantic similarity between the extracted words, extracting vector data closest to the relation vector from the dictionary data, and calculating the N-dimensional vector.

3. The analysis method of claims 1 and 2, wherein the dictionary data includes vector data representing the similarity between words.

4. The analysis method of at least either one of claims 1 to 3, wherein the calculating includes generating vector data representing the similarity between words by processing data for learning using word2vec, the data for learning including text data configured with various words, and storing the generated vector data in the dictionary data.

5. The analysis method of claim 1, wherein the calculating includes performing morphological analysis of analysis object data, and predicting the relation between nodes based on an average vector of the analyzed words.

6. The analysis method of claim 5, wherein the analysis object data is electronic mails.

7. The analysis method of at least either one of claims 1-6, further comprising converting, by the analysis system, the vectorized graph data to another graph data.

8. The analysis method of claim 6, wherein the converting includes converting to weighted graph data by calculating an inner product of the vector of the vectorized graph data.

9. The analysis method of at least either one of claims 1 to 8, further comprising, analyzing, by the analysis system, the relevance between nodes based on the vectorized graph data.

10. The analysis method of claim 9, wherein the node represents a person, and the analyzing includes analyzing human relations between nodes.

11. The analysis method of claims 9 or 10, wherein the analyzing includes calculating an average vector of all vectors between nodes based on the vectorized graph data, selecting a similar vector similar to the average vector, and extracting words of the selected similar vector.

12. A computer-implemented analysis program for analyzing a relevance between nodes by using graph theory representing a relevance between nodes, the computer-implemented analysis program comprising:

     calculating an N-dimensional vector representing a relevance between nodes based on dictionary data, the dictionary data including vector data for vectorizing words representing the relevance between nodes in N-dimension; and
     creating graph data vectorized by the calculated N-dimensional vector.

13. An analysis system for analyzing a relevance between nodes by using graph theory representing a relevance between nodes, the system comprising:

     a calculation unit for calculating an N-dimensional vector representing a relevance between nodes based on dictionary data, the dictionary data including vector data for vectorizing words representing the relevance between nodes in N-dimension; and
     a creating unit for creating graph data vectorized by the calculated N-dimensional vector.

14. The analysis system of claim 13, further comprising a conversion unit for converting the vectorized graph

**EP 3 506 131 A1**

data to another graph data.

Bag of words

| dog | cat | ⋯ | this | ⋯ |
|-----|-----|---|------|---|
| 0 | 0 | ⋯ | 1 | ⋯ |

(A)

N-gram

| aa | ab | ⋯ | th | ⋯ |
|----|----|---|----|---|
| 0 | 0 | ⋯ | 1 | ⋯ |

(B)

This is a pen.

distributed representation

| | ×1 | ×2 | ⋯ | ×N−1 | ×N |
|---|------|------|---|------|------|
| cat | 0.25 | 0.23 | ⋯ | 0.83 | 0.34 |
| dog | 0.12 | 0.26 | ⋯ | 0.80 | 0.38 |
| ⋯ | | | ⋯ | | |
| car | 0.75 | 0.44 | ⋯ | 0.22 | 0.45 |
| airplane | 0.64 | 0.32 | ⋯ | 0.19 | 0.44 |

| | ×1 | ×2 | ⋯ | ×N−1 | ×N |
|---|------|------|---|------|------|
| This | 0.05 | 0.23 | ⋯ | 0.83 | 0.34 |
| is | 0.12 | 0.26 | ⋯ | 0.80 | 0.38 |
| a | ⋯ | ⋯ | ⋯ | ⋯ | ⋯ |
| pen | 0.75 | 0.44 | ⋯ | 0.22 | 0.45 |
| . | 0.64 | 0.32 | ⋯ | 0.19 | 0.44 |

(C)

Fig. 1

(A)

| | A | B | C | D |
|---|---|---|---|---|
| A | | 1 | | |
| B | | | 1 | 1 |
| C | | 1 | | |
| D | 1 | | | |

(B)

# Fig. 2

(A)

| | A | B | C | D |
|---|---|---|---|---|
| A | | 0.8 | | |
| B | | | 0.3 | 0.3 |
| C | | 0.2 | | |
| D | 0.1 | | | |

(B)

(C)

Fig. 3

N-dimensional vector $X_{SD}$

$X_{BC}$

$X_{DA}$

A

$X_{AB}$  $X_{CB}$

D

B  $X_{BD}$

C

Source

Destination

(A)

(B)

| vector | ×1 | ×2 | ×3 | ··· | ×N-1 | ×N |
|--------|------|------|------|-----|------|------|
| $X_{SD}$ | 0.08 | 0.25 | 0.13 | ··· | 0.77 | 0.48 |

(C)

# Fig.4

| | x1 | x2 | ⋯ | xN−1 | xN |
|---|---|---|---|---|---|
| like | 0.05 | 0.23 | ⋯ | 0.83 | 0.34 |
| trust | 0.12 | 0.26 | ⋯ | 0.80 | 0.38 |
| ⋯ | ⋯ | ⋯ | ⋯ | ⋯ | ⋯ |
| dislike | 0.75 | 0.44 | ⋯ | 0.22 | 0.45 |
| jealousy | 0.64 | 0.32 | ⋯ | 0.19 | 0.44 |

# Fig. 5

Fig. 6

Fig. 7

lower ←————————————————————————— upper

30                20                10

( graph ) ← threshold calculation — ( weighted graph ) ← inner product calculation — ( vectorization graph )

# Fig. 8

Fig. 9

Fig.10

100

110

120

data for
learning

data for
evaluation

vectorization
module ~130

vectorization
graph data ~140

graph
conversion
module

160

170

graph data

vectorization
graph analysis
module

150

graph analysis
module

180

Fig. 11

data for learning

Even though it has
been a long time
since humans relay on

There was a small
~~and~~
~~it,~~
~~tly.~~

For Autumn, I think of
Kawakubo who was born
in autumn, and when I
think of Kawakubo,
a persimmon ripened
in red comes to
my mind.

(A)

data for evaluation

From: YOKOYAMA
To: SUZUKI
Hi. How are
you doing lately?

From: SATO
~~ion~~

From: TANAKA
To: YAMAMOTO
Please report the
progress of the
project as soon as
possible.

(B)

# Fig. 12

EP 3 506 131 A1

dictionary data

| word | x1 | x2 | $\cdots$ | xN-1 | xN |
|---|---|---|---|---|---|
| like | 0.05 | 0.23 | $\cdots$ | 0.83 | 0.34 |
| trust | 0.12 | 0.26 | $\cdots$ | 0.8 | 0.38 |
| ... | ... | ... | $\cdots$ | ... | ... |
| dislike | 0.75 | 0.44 | $\cdots$ | -0.22 | -0.45 |
| jealousy | 0.64 | 0.32 | $\cdots$ | -0.19 | -0.44 |

(A)

vectrization graph data

(B)

# Fig. 13

START

COLLECT DATA FOR LEARNING — S100

VECTOR GENERATION PROCESS — S102

CREATE DICTIONARY — S104

COLLECT DATA FOR EVALUATION — S110

GENERATE CONVEN-TIONAL TYPE GRAPH — S112

PREDICT RELATION BETWEEN NODES — S114

REFER TO DICTIONARY AND VECTORIZE THE PREDICTED RELATION — S116

APPLY RELATION VECTOR TO THE CREATED GRAPH TO GENERATE VECTORIZATION GRAPH — S118

END

F i g. 14

graph

(A)

| source | | | | | |
|---|---|---|---|---|---|
| | 0 | 1 | ⋯ | 1 | 1 |
| | 1 | 0 | ⋯ | 0 | 0 |
| | ⋯ | ⋯ | ⋯ | ⋯ | ⋯ |
| | 0 | 1 | ⋯ | 1 | 1 |
| | 0 | 0 | ⋯ | 1 | 0 |

destination

weighted graph

| source | | | | | |
|---|---|---|---|---|---|
| | 0 | 0.85 | ⋯ | 0.48 | 0.41 |
| | 0.30 | 0 | ⋯ | 0 | 0 |
| | ⋯ | ⋯ | ⋯ | ⋯ | ⋯ |
| | 0 | 0.39 | ⋯ | 0.39 | 0.57 |
| | 0 | 0 | ⋯ | 0.81 | 0 |

(B)

destination

# Fig. 15

START

COLLECT TEXT FILES
FOR LEANING — S200

COLLECT E-MAILS
FOR EVALUATION — S210

PERFORM WORD2VEC — S202

CREATE A GRAPH BETWEEN
SENDER AND RECIPIENT — S212

GENERATE DICTIONARY
FROM WORD2VEC — S204

PREDICT THE RELATION FROM
THE SENTENCES OF THE E-MAILS
BETWEEN SENDER AND RECIPIENT — S214

REFER TO DICTIONARY AND
VECTORIZE THE PREDICTED RELATION — S216

APPLY RELATION VECTOR TO
THE CREATED GRAPH TO
GENERATE VECTORIZED GRAPH — S218

END

Fig. 16

START

INPUT EXTRACTION VECTOR — S300

CALCULATE INNER PRODUCT OF THE EXTRACTION VECTOR AND ALL RELATION VECTORS — S302

CREATE A WEIGHTED GRAPH WITH WEIGHT WHICH IS THE INNER PRODUCT — S304

END

(A)

START

CALCULATE INNER PRODUCT OF EACH RELATION VECTOR OF ITSELF — S310

CREATE A WEIGHTED GRAPH WITH WEIGHT WHICH IS THE INNER PRODUCT — S312

END

(B)

Fig. 17

START

INPUT GRAPH DATA — S400

OBTAIN THE NUMBER OF NODES — S402

OBTAIN THE NUMBER OF EDGES — S404

CALCULATE THE DENSITY FROM THE NUMBERS OF NODES AND EDGES — S406

$$density = \frac{m}{n(n-1)}$$

END

# Fig. 18

START

| INPUT VECTORIZATION GRAPH DATA | S500 |

| CALCULATE AN AVERAGE VECTOR OF ALL RELATION VECTORS | S502 |

| OBTAIN A VECTOR SIMILAR TO THE AVERAGE VECTOR FROM DICTIONARY | S504 |

| EXTRACT WORDS HAVING THE SIMILAR VECTOR | S506 |

END

Fig. 19

<div align="center">

**INTERNATIONAL SEARCH REPORT**

</div>

| International application No. |
|---|
| PCT/JP2018/018137 |

**A. CLASSIFICATION OF SUBJECT MATTER**
Int.Cl. G06F17/30(2006.01)i

According to International Patent Classification (IPC) or to both national classification and IPC

**B. FIELDS SEARCHED**

Minimum documentation searched (classification system followed by classification symbols)
Int.Cl. G06F17/30

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | YUAN, Yanhong et al., "A New Approach to Embedding Semantic Link Network with Word2Vec Binary Code", 2015 11th International Conference on Semantics, Knowledge and Grids (SKG) [online], 10 March 2016, pp. 9–16, [retrieved on 18 June 2018], retrieved from:IEEE Xplore | 1–14 |
| A | JP 2008–112432 A (JAPAN BROADCASTING CORPORATION) 15 May 2008, entire text, all drawings (Family: none) | 1–14 |
| A | JP 2012–103820 A (VRI INC.) 31 May 2012, entire text, all drawings (Family: none) | 1–14 |
| A | JP 9–288675 A (SHARP CORP.) 04 November 1997, entire text, all drawings (Family: none) | 1–14 |
| A | WO 2016/093831 A1 (FACEBOOK, INC.) 16 June 2016, entire text, all drawings & US 2016/0165002 A1 & EP 3032471 A1 & CA 2969095 A1 & AU 2014413669 A1 & CN 107004245 A & KR 10–2017–0091155 A & MX 2017007650 A & JP 2018–506769 A | 1–14 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 18 June 2018 (18.06.2018) | 03 July 2018 (03.07.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**EP 3 506 131 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017027168 A
- JP 2017027106 A